# EUROPEAN PATENT APPLICATION

(11) **EP 1 622 332 A1**
(43) Date of publication of application: **01.02.2006**
(21) Application number: 04254597.0
(22) Date of filing: 30.07.2004
(51) Int. Cl.: H04L 29/06

(54) **Method and apparatus for regulating network access**

(71) Applicant: Zyxel Communications Corporation, Hsin-Chu, Taiwan (TW)
(72) Inventor: Liu, Hsueh-Ying, Jhudong Township, Hsinchu County 310 (TW); Weng, Ming-Chuan, Sinpu Township, Hsinchu County 310 (TW)
(74) Representative: Dearing-Lambert, Peter Richard

(57) **Abstract**

A method regulates a connection of at least one computer (10) to Internet (30) through a network-regulating apparatus (20). At least one supervisor logs in a computer (10) connected to the network-regulating apparatus (20) and sets a user attribution for at least one user in the network-regulating apparatus (20). The supervisor is authorized to create new user, delete user and edit user data. The supervisor also can set accessible time per day, accessible time per week for user, or unlimited time for user. The supervisor can set up certain keyword to examine the address and content of a website to identify the accessibility of a website. When a user accesses Internet (30) for the first time, the user logs in the network-regulating apparatus (20) and accessing Internet (30) according to the user attribution set in the network-regulating apparatus (20).

## Description

### BACKGROUND OF THE INVENTION

### 1. Field of the invention

The present invention relates to a network-regulating method and a network-regulating apparatus for accessing network, especially to a network-regulating method and a network-regulating apparatus enabling parents to regulate the network-accessing time and accessible website for their children.

### 2. Description of the Prior Art

The prevailing of computer and Internet technology paves the broadband information highway to small office and family. People can obtain knowledge or amusement information in text, audio or video format from Internet, even though some of them are not suitable for young children.

The popularity of Internet also causes side effect to young children whose family has broadband access. The young children may indulge themselves to Internet for long time. In worse scenario, the young children may access porn website which is exclusive for adult. The porn website generally has no restrict regulation to user age and only displays warming message.

Certain network software is developed to provide parental lock for limiting accessing time to Internet or prohibiting the accessing of porn or other indecent website. However, the network software requires reinstallation after the system is reinstalled. This kind of software is also unsuitable for enterprise to prevent employee from unauthorized usage. This network software also cannot stop hacker.

### SUMMARY OF THE INVENTION

It is the object of the present invention to provide a network-regulating method and a network-regulating apparatus for controlling Internet access of computer. The computer has restricted network-accessing time and accessible website determined by the network-regulating method and the network-regulating apparatus. Therefore, parents can regulate the network-accessing time and accessible website for their children and the network administrator can regulate the network accessing attribution for employee. The network-regulating method and the network-regulating apparatus can be installed in a computer connected to other computers for regulating the Internet access of other computer. It saves the effort to set up restriction on every computer.

To achieve the above object, the present invention provides a method regulating a connection of at least one computer to Internet through a network-regulating apparatus. At least one supervisor logs in a computer connected to the network-regulating apparatus and sets a user attribution for at least one user in the network-regulating apparatus. The supervisor is authorized to create new user, delete user and edit user data. The supervisor also can set accessible time per day, accessible time per week for user, or unlimited time for user. The supervisor can set up certain keyword to examine the address and content of a website to identify the accessibility of a website. When a user accesses Internet for the first time, the user logs in the network-regulating apparatus and accessing Internet according to the user attribution set in the network-regulating apparatus.

To achieve the above object, the present invention provides a network-regulating apparatus connected between at least one computer and Internet. The network-regulating apparatus comprises at least one WAN port connected to Internet; at least one LAN port connected to at least one of a computer and a hub connected to a computer; a web-regulating server enabling at least one supervisor setting a user attribution for at least one user to access Internet, whereby the user accesses Internet according the user attribution thereof.

The above summaries are intended to illustrate exemplary embodiments of the invention, which will be best understood in conjunction with the detailed description to follow, and are not intended to limit the scope of the appended claims.

### BRIEF DESCRIPTION OF DRAWING

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:
**Fig. 1** shows a schematic diagram of a network-regulating apparatus according to the present invention;
**Fig. 2** shows a block diagram of the network-regulating apparatus for network access according to the present invention;
**Fig. 3** shows a flowchart for a supervisor to log in the web-regulating server according to the present invention;
**Fig. 4** shows user list for the supervisor in browser screen;
**Fig. 5** shows a preferred embodiment for setting user name, password, and user group;
**Fig. 6** shows a preferred embodiment for setting time budget for user;
**Fig. 7** shows a preferred embodiment for setting accessible website for user; and
**Fig. 8** shows a flowchart for user to use Internet according to the present invention.

### DETAILED DESCRIPTION OF THE PREFERRED EMBODIMENTS

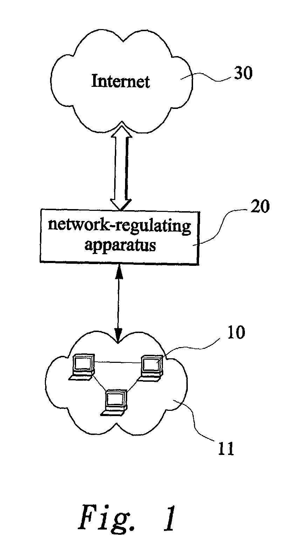

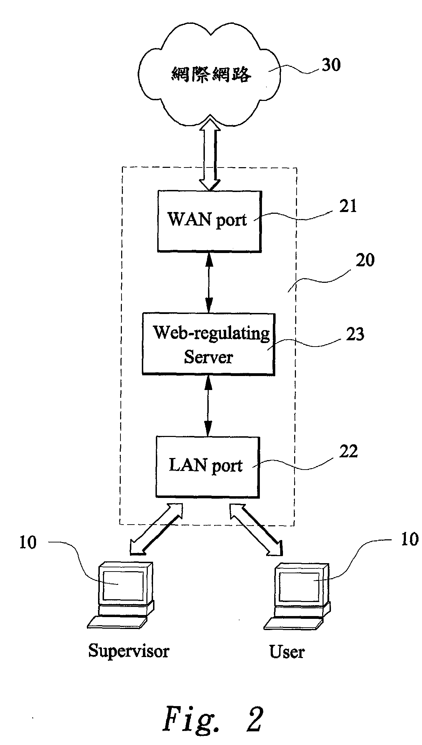

**Fig. 1** shows a schematic diagram of a network-regulating apparatus according to the present invention. **Fig. 2** shows a block diagram of the network-regulating apparatus for network access according to the present invention. In this shown embodiment, at least one computer **10** is connected to Internet **30** through a network-regulating apparatus **20** of the present invention. The network-regulating apparatus **20** can be at least one of an xDSL modem, a router, a gateway, an IP sharing, a hub and a wireless access point (WAP).

The network-regulating apparatus **20** comprises at least one WAN port **21**, at least one LAN port **22**, and a web-regulating server **23**. The WAN port **21** is connected to Internet **30**, and the LAN port **22** is connected to at least one of a computer **10** and a hub. The LAN port **22** is connected to other computer or hub through the connected hub **11** to form a local area network.

When at one supervisor or at least one user wants to access Internet **30** by a computer **10** connected to Internet **30** through the network-regulating apparatus **20**, the supervisor or the user should log in the web- regulating server **23** in the network-regulating apparatus **20**. In this example, the supervisor is network administrator in a company or parent in family, and the user is employee in the company or child in the family.

The supervisor can set up the access attribution for each user in web-regulating server **23** after logging in. The user can access Internet according to his access attribution recorded in web-regulating server **23**.

The supervisor is authorized to create new user, delete user and edit user data. Moreover, the supervisor is authorized to set user name, password, accessible time and accessible website for user. For example, the supervisor can set up accessible time per day, accessible time per week for user, and can give a user with unlimited time for accessing network. The supervisor can set up certain keyword to examine the address and content of a website to identify the accessibility of this website.

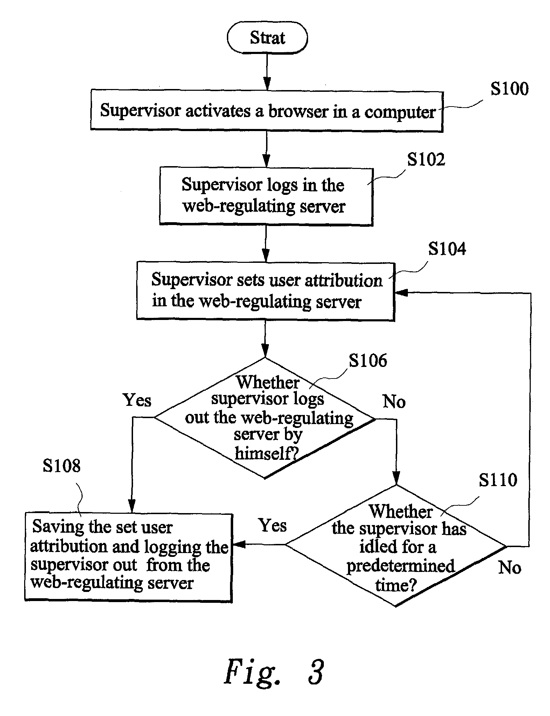

**Fig. 3** shows a flowchart for a supervisor to log in the web-regulating server according to the present invention. At first a supervisor activates a browser in a computer **10** connected to the network-regulating apparatus **20** in step **S100**. At this time, the computer **10** sends an IP address of the website to be accessed by the browser, wherein the website is a default home location of the browser. The network-regulating apparatus **20** sends the IP address of the web-regulating server **23**, for example, 192.168.1.1, to the computer **10** such that the supervisor can access the web-regulating server **23** of the network-regulating apparatus **20**.

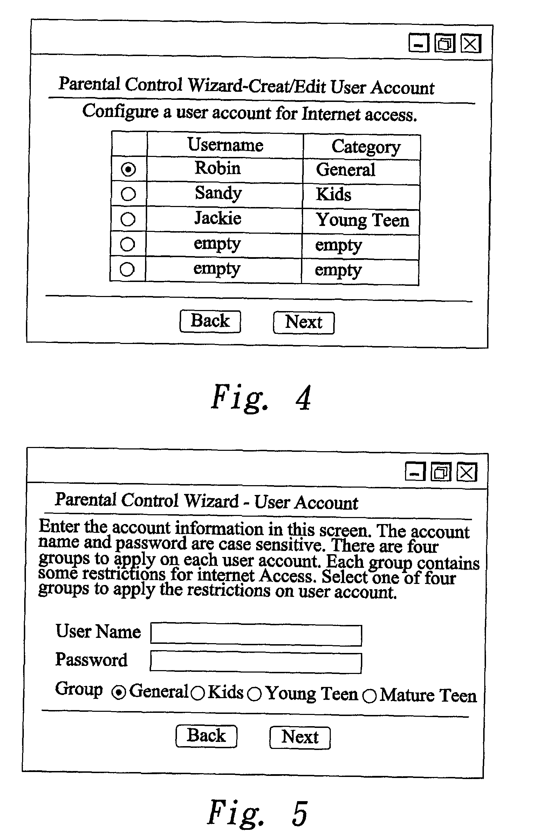

At this time, the browser screen shows a dialog box for inputting user name and password. The supervisor needs to input correct user name and password for supervisor to log in the web-regulating server in step **S102**. The web-regulating server **23** displays a user list for the supervisor in browser screen as shown in **Fig. 4**. The supervisor can set up user attribution to Internet in the web-regulating server **23** in step S104.

The supervisor is authorized to create new user, delete user and edit user data. Moreover, the supervisor is authorized to set user name, password, user group, accessible time and accessible website for user. **Fig. 5** shows a preferred embodiment for setting user name, password, and user group.

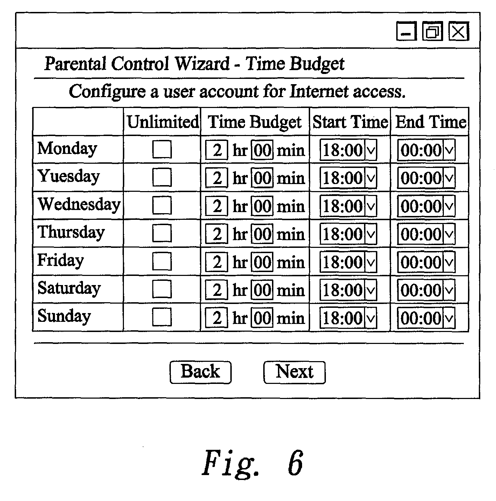

**Fig. 6** shows a preferred embodiment for setting time budget for user. For example, the supervisor can set up accessible time per day, accessible time per week for user, and can give a user with unlimited time for accessing network.

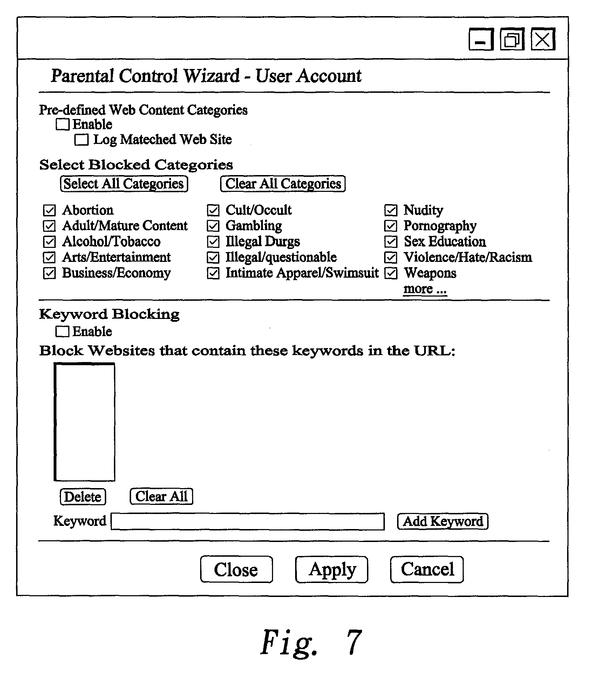

**Fig. 7** shows a preferred embodiment for setting accessible website for user. The website can be regulated according to the categories thereof or by the keyword thereof. Therefore, the supervisor can set accessible categories for user or block unallowable categories for user. The supervisor also can set up keyword to examine content and domain name of the website to be accessed.

Reference is made again to **Fig. 3**, the network-regulating apparatus judges whether the supervisor logs out the web-regulating server **23** by himself in step **S106**. If true, the network-regulating apparatus saves the user attribution set by the supervisor and logs out the supervisor from the web-regulating server **23** in step **S108**.

If the supervisor does not log out the web-regulating server **23** by himself, the network-regulating apparatus then judges whether the supervisor has idled for a predetermined time such as **10** minutes in step **S110**. If the idled time exceeds **10** minutes, a pop window is displayed to show automatic log out message, and the user attribution set by the supervisor is automatically saved in step **S108**. The web-regulating server **23** allows the supervisor to proceed to the setting of user attribution if above conditions are not met.

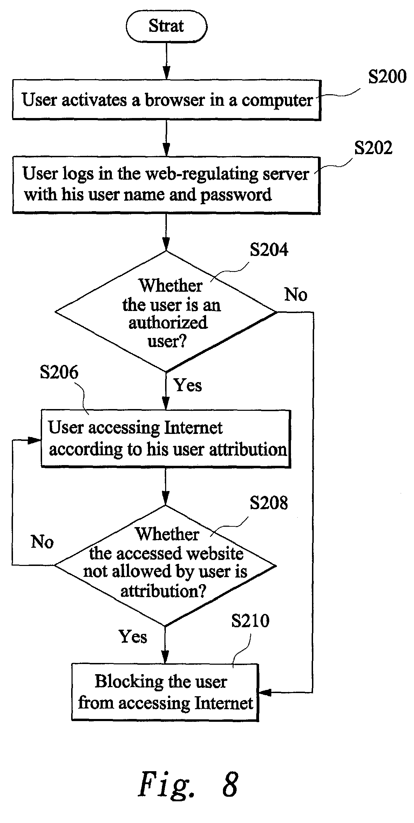

**Fig. 8** shows a flowchart for user to use Internet according to the present invention. In step **S200**, when a user accesses the Internet **30** for the first time by activating a browser on a computer **10** connected to the network-regulating apparatus **20**, the network-regulating apparatus **20** interprets the address of the web-regulating server **23** as the home location of the browser. Therefore, the user logs in the web-regulating server **23** and inputs his user name and password in step **S202.**

The network-regulating apparatus **20** judges whether the logging-in user is an approved user in step **S204**. If the user is an approved user by supervisor, the network-regulating apparatus **20** will connect the computer to Internet and the user can access Internet according to his user attribution in step **S206** and the accessing time is also counted.

If the user name and password do not justify an approved user, the network-regulating apparatus **20** blocks the connection to Internet in step **S208** and requests the user to input user name and password again. The user can also ask the supervisor to set his user attribution. If the user is an approved one but he accesses a website not allowed by his user attribution, the network-regulating apparatus **20** blocks the connection to Internet in step **S210**.

Similarly, the network-regulating apparatus judges whether the user logs out the web-regulating server **23** by himself. If true, the network-regulating apparatus logs out the user from the web-regulating server **23**.

If the user does not log out the web-regulating server **23** by himself, the network-regulating apparatus then judges whether the user has idled for a predetermined time such as 10 minutes. If the idled time exceeds **10** minutes, a pop window is displayed to show automatic log out message, and the web-regulating server **23** automatically logs out.

Although the present invention has been described with reference to the preferred embodiment thereof, it will be understood that the invention is not limited to the details thereof Various substitutions and modifications have suggested in the foregoing description, and other will occur to those of ordinary skill in the art. Therefore, all such substitutions and modifications are intended to be embraced within the scope of the invention as defined in the appended claims.

## Claims

1. A network-regulating method, the method regulating a connection of at least one computer (10) to Internet (30) through a network-regulating apparatus (20) and comprising following steps:
a. at least one supervisor setting a user attribution for at least one user in the network-regulating apparatus (20); and
b. when a user accessing Internet (30) for the first time, the user logging the network-regulating apparatus (20) and accessing Internet (30) according to the user attribution set in the network-regulating apparatus (20).

2. The network-regulating method as in claim 1, wherein the network-regulating apparatus (20) is one of an xDSL modem, a router, a gateway, an IP sharing, a hub and a wireless access point (WAP).

3. The network-regulating method as in claim 1, wherein in step a, the supervisor is network administrator in a company or parent in a family.

4. The network-regulating method as in claim 1, wherein in step a, the user is employee in the company or child in the family.

5. The network-regulating method as in claim 1, further comprising following step before step a:
the supervisor logs in the network-regulating apparatus by a computer (10) connected to the network-regulating apparatus (20).

6. The network-regulating method as in claim 5, further comprising following steps before step a:
activating a browser to access an address of a web-regulating server (23) of the network-regulating apparatus (20); and
logging in the web-regulating server by inputting user name and password of the supervisor.

7. The network-regulating method as in claim 1, wherein in step a, the supervisor is authorized to create new user, delete user and edit user data.

8. The network-regulating method as in claim 1, wherein in step a, the supervisor is authorized to set user name, password, accessible time and accessible website for user.

9. The network-regulating method as in claim 8, wherein in step a, the supervisor sets accessible time per day, accessible time per week for user, or unlimited time for user for setting accessible time.

10. The network-regulating method as in claim 8, wherein in step a, the supervisor sets up keyword to examine content and domain name of a website to be accessed for setting accessible website for user.

11. The network-regulating method as in claim 1, further comprising following steps after step a:
(a1) judging whether the supervisor logs out the web-regulating server (23) by himself;
(a2) saving the user attribution set by the supervisor and logging out the supervisor from the web-regulating server (23) when the supervisor logs out the web-regulating server (23) by himself;
(a3) judging whether the supervisor has idled for a predetermined time when the supervisor does not log out the web-regulating server (23) by himself;
(a4) displaying a pop window to show automatic log out message when the supervisor has idled for a predetermined time in the sub-step (a3); and
(a5) allowing the supervisor to proceed to the setting of user attribution when the supervisor has not idled for a predetermined time in the sub-step (a3).

12. The network-regulating method as in claim 1, wherein in step b, the user accesses Internet (30) through any computer connected to the network-regulating apparatus (20).

13. The network-regulating method as in claim 12, further comprising the steps of:
the user activating a browser on the computer (10);
linking to an address of a web-regulating server (23) of the network-regulating apparatus (20) as a home location of the browser;
inputting a user name and a password of the user to log in the web-regulating server (23) of the network-regulating apparatus (20); and
linking the computer (10) to Internet (30) and counting accessing time when the user is an authorized user.

14. The network-regulating method as in claim 13, further comprising the steps of:
blocking the accessing of Internet (30) when the user name and the password are not authorized; and
blocking the accessing of Internet (30) when the user accesses a website not allowed by an attribution thereof.

15. The network-regulating method as in claim 13, further comprising the step of:
automatically logging out the web-regulating server (23) of the network-regulating apparatus (20).

16. A network-regulating apparatus connected between at least one computer and Internet, the network-regulating apparatus (20) comprising:
at least one WAN port (21) connected to Internet (30);
at least one LAN port (22) connected to at least one of a computer (10) and a hub connected to a computer (10);
a web-regulating server (23) enabling at least one supervisor setting a user attribution for at least one user to access Internet (30), whereby the user accesses Internet (30) according the user attribution thereof.

17. The network-regulating apparatus as in claim 16, wherein the network-regulating apparatus (20) is one of an xDSL modem, a router, a gateway, an IP sharing, a hub and a wireless access point (WAP).

18. The network-regulating apparatus as in claim 16, wherein the supervisor is network administrator in a company or parent in a family.

19. The network-regulating apparatus as in claim 16, wherein the user is employee in the company or child in the family.

20. The network-regulating apparatus as in claim 16, wherein the supervisor logs in the network-regulating apparatus (20) through any computer (10) connected to the network-regulating apparatus (20) for setting user attribution.

21. The network-regulating apparatus as in claim 16, wherein the supervisor is authorized to create new user, delete user and edit user data.

22. The network-regulating apparatus as in claim 16, wherein, the supervisor is authorized to set user name, password, accessible time and accessible website for user.

23. The network-regulating apparatus as in claim 22, wherein the supervisor sets accessible time per day, accessible time per week for user, or unlimited time for user to set accessible time.

24. The network-regulating apparatus as in claim 22, wherein the supervisor sets up keyword to examine content and domain name of a website to be accessed to set accessible website for user.

25. The network-regulating apparatus as in claim 16, wherein the user accesses Internet (30) through any computer (10) connected to the network-regulating apparatus (20).
